# EUROPEAN PATENT APPLICATION

(11) **EP 1 555 145 A1**
(43) Date of publication of application: **20.07.2005**
(21) Application number: 04257656.1
(22) Date of filing: 09.12.2004
(51) Int. Cl.: B60G 21/055, B60G 11/20, F16F 1/16, C23C 4/00

(54) **Spray formed stablizer bar lateral retainer**

(30) Priority: 12.12.2003 US 734467
(71) Applicant: Meritor Suspension Systems Company Inc., Troy, Michigan 48084 (US)
(72) Inventor: Fader, Joseph, Brighton Michigan 48114 (US); Kleckner, Mark Allen, Lake Orion Michigan 48362 (US); Bechard, Maurice, Tupperville Ontario NOP 2M0 (CA); Yue, Stephen, Montreal Quebec H4A 3H3 (CA); Lopes, Luiz, Troy Michigan 48084 (US); Elders, William James, Chatham Ontario N7M 5P4 (CA); Sowinski, Timothy James, Chatham Ontario N7L 2T4 (CA); Medeiros, Leo, Guelph Ontario N1G 1P4 (CA); Kiousis, Pete Nick, Birmingham Michigan 48009 (US)
(74) Representative: Jones, John Bryn

(57) **Abstract**

An anti-shift collar prevents lateral movement of a stabilizer bar assembly. The anti-shift collar is thermally formed to a central segment of the stabilizer bar and is locked to the central segment thereby.

## Description

### BACKGROUND OF THE INVENTION

The present invention relates to a vehicle stabilizer bar, and more particularly to a thermally formed lateral retainer therefor.

Vehicles are commonly equipped with independent suspension systems for absorbing road shock and other vibrations while providing a smooth and comfortable ride for the vehicle occupants. In suspension systems of this type, a stabilizer bar is often used to increase the roll rigidity and improve the steering stability of the vehicle.

Typically, the stabilizer bar is a rod-shaped member oriented to extend laterally across the vehicle and an arm segment extending longitudinally at each end of the central segment. The central segment of the stabilizer bar is supported for rotation about its own longitudinal axis by one or more mounting brackets which are fixed to the vehicle body or frame. The distal end of each arm segment is coupled to a control arm of the suspension system by an end link.

When the vehicle is subjected to a lateral rolling force such as, for example, while the vehicle negotiates a turn, the arm segments pivot in opposite directions with respect to the longitudinal axis of the central segment. As a result, torsional reaction forces are generated which act through the arm segments to urge the control arms to move toward their normal position. Thus, the vehicle body will be prevented from excessive rolling or leaning to either side by the torsional resistance produced by the stabilizer bar.

The stabilizer bar may shift laterally during suspension articulation. The lateral shift is resisted by a multiple of collars mounted to the central segment of the stabilizer bar. The collars facially engage bushings mounting to the vehicle body or frame to minimize lateral shift of the stabilizer bar.

The collars are mounted to the stabilizer bar after final shot peening and bending operations are performed to avoid reducing the stabilizer bar integrity. Due to the collar mounting locations and forming requirements, conventional collars are overmolded plastic components or collars that are mechanically clamped to the bar. Although effective, overmolded collars may be subject to relatively rapid wear while clamped collars have heretofore been complicated to mount, may loosen over time, and are relatively expensive.

Accordingly, it is desirable to provide an inexpensive lateral restraint collar, which is uncomplicated to mount, yet resists side forces from the stabilizer bar for a prolonged service life without appreciable wear.

### SUMMARY OF THE INVENTION

The anti-shift collar according to the present invention prevents lateral movement of a stabilizer bar assembly. The anti-shift collar is thermally formed in a circumferential array to a central segment of the stabilizer bar.

The present invention therefore provides an inexpensive lateral restraint collar that is uncomplicated to mount yet resists side forces from the stabilizer bar for a prolonged service life without appreciable wear.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a general partial phantom view of a vehicle illustrating a suspension system;
Figure 2 is an expanded view of a stabilizer bar having an anti-shift collar according to the present invention;
Figure 3 is a perspective view of a thermally formed anti-shift collar;
Figure 4 is a perspective view of another thermally formed anti-shift collar; and
Figure 5 is a block diagram of a process for forming a stabilizer bar and thermally formed anti-shift collar according to the present invention.

### DETAILED DESCRIPTION OF THE PREFERRED EMBODIMENT

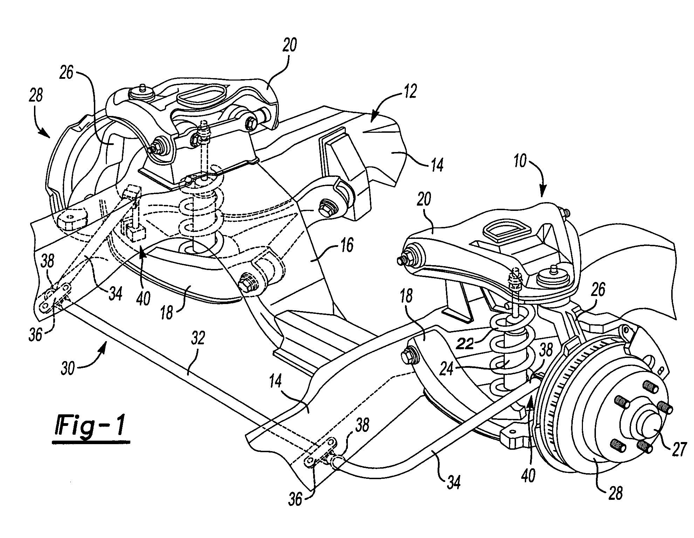

Figure 1 illustrates a general perspective view of an independent front wheel suspension system 10. It should be understood that although a particular suspension is disclosed in the illustrated embodiment, any suspension that utilizes a stabilizer bar will also benefit from the present invention.

A vehicle frame 12 includes a pair of longitudinal side rails 14 and a crossbeam 16. Suspension system 10 includes a long lower control arm 18 and a short upper control arm 20, which are both pivotally attached to frame 12. A strut assembly having a helical coil spring 23 and a strut damper 24 is retained between an intermediate portion of lower control arm 18 and frame 12 to support the weight of the vehicle body and any loads which are transmitted through lower control arm 18. Upper control arm 20 is connected to lower control arm 18 by a steering knuckle 26. A hub and rotor assembly 28 is rotatably attached to a spindle portion 22 of steering knuckle 26 such that a wheel and tire (not shown) may be mounted thereon.

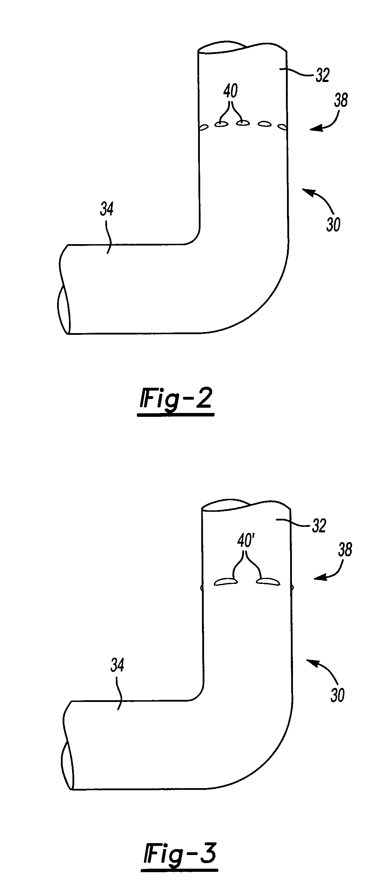

A stabilizer bar assembly 30 includes an elongated central segment 32 that extends laterally across the vehicle and a pair of arm segments 34, which extend longitudinally along the vehicle at each end of central segment 32. Central segment 32 is rotatably attached to frame rails 14 through a pair of mounting brackets 36. An anti-shift collar 38 is thermally formed upon the central segment 32 (also illustrated in Figure 2) adjacent the mounting brackets 36 to minimize lateral shift of the stabilizer bar assembly 30.

As generally understood, thermal spraying includes the localized application of a molten metal such as steel onto a substrate. The molten metal solidifies upon contact with the substrate to form a built up area. Thermal spraying can be performed before or after shot peening. Shot peening produces a plastically deformed surface which increases the surface residual stress on the bar resulting in a non-uniform distribution of stress along the cross-section of the bar to thereby increase the strength of the bar. A shot peened surface is also an effective surface preparation operation for application of thermal forming to a substrate.

Other thermal forming operations such as warm spraying will likewise benefit from the present invention. Warm spraying includes spraying a metal powder at elevated temperatures onto a substrate. A combined effect of heat and plastic deformation of the metal powder results in welding of the powder to the substrate to form a raised area.

Referring to Figure 2, the anti-shift collar 38 preferably includes a circumferential array of raised areas 40 which are thermally formed to the central segment 32. It should be understood that the term "collar" is to be construed broadly in that even a single raised area will operate as an anti-shift collar 38 as defined herein. It should be further understood that various raised areas 40 will benefit from the present invention such that the raised areas disclosed are not limited by the illustrated embodiment.

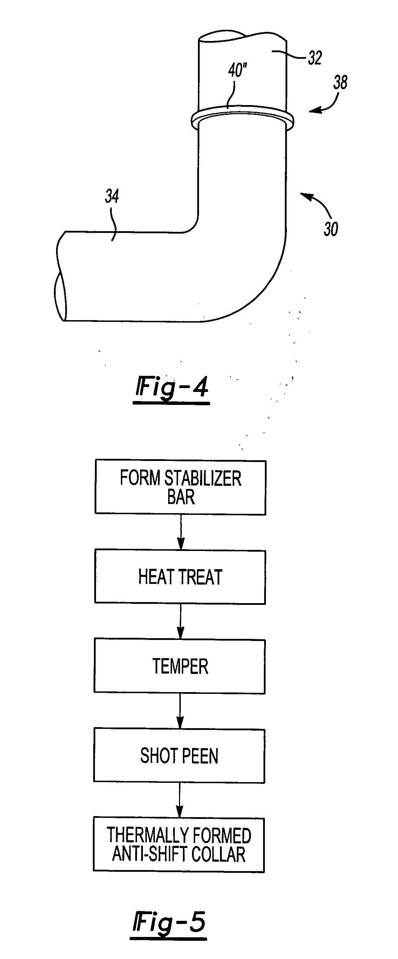

Preferably, the raised areas 40 are an array of discrete spots formed circumferentially about the stabilizer bar assembly 30. Other geometries such as an array of raised segments 40' (Figure 3), and a continuous raised line 40" (Figure 4) will likewise benefit from the present invention.

As the anti-shift collar 38 is thermally formed to the outer surface of the stabilizer bar assembly 30, the collar is advantageously formed onto the bar after the end of the bar is formed. The end of the bar typically includes an attachment such as a forged spade end.

The surface properties of the stabilizer bar assembly 30 are minimally affected by the thermal spraying operation as the stabilizer bar assembly 30 operates as a relatively large heat sink. Moreover, as the anti-shift collar 38 may located in other areas, the central segment 32 is a preferred location since forces are applied axially along this segment thereby minimizing fatigue effects from contact between the collar 38. As the collar 38 is integral to the stabilizer bar assembly 30, there is no possibility of loosening. Furthermore, no inventory of collars is required as thermal spraying is applicable to any configuration of stabilizer bar.

Referring to Figure 5, the stabilizer bar assembly 30 is formed into a desired shape such as by cold or hot forming processes. A cold formed bar may be subsequently stress relieved or a hot formed bar quenched to obtain appropriate microstructure for good spring properties. The bar is then tempered to reduce the hardness and increase the toughness. The bar 30 may then be shot peened to produce a plastically deformed surface with increased surface residual stresses resulting in a non-uniform distribution of stress along the cross-section of the bar to thereby increase the strength of the bar and prepare the surface for thermal spraying. Finally, the anti-shift collar 38 preferably includes a circumferential array of raised areas 40 which are thermally formed to the central segment 32.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A stabilizer bar assembly (30) comprising:
a stabilizer bar; and
an anti-shift collar (38) thermally formed onto said stabilizer bar.

2. The stabilizer bar assembly as recited in claim 1, wherein said anti-shift collar (38) comprises an array of raised areas (40, 40', 40").

3. The stabilizer bar assembly as recited in claim 2, wherein said array of raised areas comprise an array of spots.

4. The stabilizer bar assembly as recited in claim 2, wherein said array of raised areas comprise an array of lines.

5. The stabilizer bar assembly as recited in claim 4, wherein said anti-shift collar (38) comprises a raised line extending about a circumference of said stabilizer bar.

6. A method of forming an anti-shift collar (38) to a stabilizer bar comprising the steps of:
(1) thermally forming the anti-shift collar (38) onto the stabilizer bar at a desired location.

7. A method as recited in claim 6, wherein said step (1) further comprises the step of:
thermal spraying.

8. A method as recited in claim 6, wherein said step (1) further comprises the step of:
warm spraying.

9. A method as recited in claim 6, wherein said step (1) further comprises the step of:
thermally spraying an array of raised areas (40, 40', 40") about a circumference of the stabilizer bar.

10. A method as recited in claim 6, wherein said step (1) further comprises the step of:
thermally spraying an array of spots about a circumference of the stabilizer bar.

11. A method as recited in claim 6, wherein said step (1) further comprises the step of:
thermally spraying an array of segments about a circumference of the stabilizer bar.

12. A method as recited in any one of claims 6 to 11, further comprising the step of:
shot peening the stabilizer bar prior to said step (1).

13. A method as recited in any one of claims 6 to 11, further comprising the step of:
completely forming the stabilizer bar prior to said step (1).
